# EUROPEAN PATENT SPECIFICATION

(11) **EP 0 680 810 B1**
(45) Date of publication and mention of the grant of the patent: **22.07.1998**
(21) Application number: 94106944.5
(22) Date of filing: 04.05.1994
(51) Int. Cl.: B27K 3/36

(54) **Process for acetylating solid wood**
Verfahren zur Acetylierung von Holz
Procédé pour l'acétylation du bois

(43) Date of publication of application: 08.11.1995
(73) Proprietor: STICHTING HOUT RESEARCH ( SHR), 3606 AP Maarssen (NL)
(72) Inventor: Militz, Holger, NL-3956 EP Leersum (NL); Beckers, Erwin Petrus Joseph, NL-8232 KW Lelystad (NL)
(74) Representative: Patentanwälte Hauck, Graalfs, Wehnert, Döring, Siemons

(56) References cited:
- EP-A- 0 213 252
- WO-A-94/09057
- DATABASE WPI Section Ch, Week 7433, Derwent Publications Ltd., London, GB; Class E17, AN 74-59459V & SU-A-400 473 (BURLAKOV V D ET AL) 1 April 1974
- DATABASE WPI Section Ch, Week 7419, Derwent Publications Ltd., London, GB; Class E17, AN 74-35880V & SU-A-391 951 (LATVIAN AGRIC ACADEMY) 13 December 1973

## Description

The present invention relates to a process for the acetylation of wood according to the introductory portion of patent claim 1.

Several processes of acetylation designed for stabilizing the dimensions and/or the biological resistance of wood and lignocellulosic material have been suggested. All processes proposed have failed in achieving any real commercial significance as, in general, the prior art methods are too time consuming, complicated, or expensive, or the products obtained have undesirable properties. This means that the prior art techniques are not suitable for acetylation in an industrial scale.

The process described in EP 0 213 252 tries to overcome these disadvantages. This process involves providing the material with a moisture content not exceeding 20%, supplying acetylation medium free of cosolvents and diluents and being liquid acetic anhydride allowed to contain acetic acid, thereby impregnating the same, removing the acetylation medium not impregnated into the material by drainage, and exposing the impregnated material to heating at a temperature in the range of 80 - 150°C, preferably 90 - 130°C, for a period of time from 2 to 8 hours, including recovery of chemicals.

Although this process known from EP 0213 252 describes a treatment of lignocellulosic material in general, the process is mainly only valid when using fibrous material or wood of small dimensions, as only with these materials an easy and fast penetration of the material with acetic anhydride and heat is ensured.

When acetylating solid wood on a practical scale, the above-mentioned method has a number of disadvantages. A process without high pressure is not applicable for solid wood of larger dimensions. High pressures are required to be able to impregnate the wood with acetic anhydride. Only dry or partially dry wood (< 20%) can be used. In an industrial process, a low moisture content of the wood is difficult to achieve and not desirable because of the high danger of cracks. After impregnation the lignocellulosic material is placed in a preheated vessel. The wood is impregnated with a strongly corrosive reagent and should therefore be held in a closed installation. Handling wood impregnated with acetic anhydride is a hazardous activity and should be prevented. Because of the separation of impregnation and heating, two vessels are required instead of one if, in a commercial scale, the time of heating is to be kept to a minimum. This makes an acetylation plant more expensive. The impregnated wood is surrounded by air. Heat transfer in air is low. Therefore, the reaction times for the acetylation of solid wood of practical dimensions are long. During the reaction step the wood is heated to high temperatures in a relatively dry environment. When acetylating solid wood of larger dimensions, this can result in the formation of cracks.

Non-removed acetic acid in the acetylated wood is a major obstacle for the industrial use of acetylated wood because of the severe smell. This especially counts for solid wood which is often processed further in, e. g., window frames or doors. An exposure of workmen and the environment to acetic acid dust or vapours is not healthy and, therefore, not acceptable. A final vacuum is not enough to remove all acetic acid formed during the reaction when working with solid wood. Other post-treatments with chemicals as, e. g., proposed in EP 0 213 252 complicate the process and make it less environmentally acceptable. Residual acetic acid or a complicating post-treatment with chemicals make the acetylation process for solid wood non-feasible.

The process mentioned in EP 0 213 252 is very much directed to the acetylation of fibrous and solid wood of smaller dimensions. For a successful acetylation of solid wood in commercial dimensions, the process needs to be different and further improved.

A process with the features of the introductory portion of claim 1 is known from DATABASE WPI, Section Ch, Week 7433, Derwent Publications Ltd., London GB; Class E17, AN 74-59459V & SU-A-400473. The process mentioned in this publication is very much directed to the acetylation of fibers or small wood particles. With these materials the permeability with respect to liquids is of lesser importance due to their large ratio surface: content.

Furthermore, according to the known process the cold excess acetic anhydride is drained from the reactor, and then the impregnated material is heated for further reaction. Furthermore, the impregnated material is surrounded by air or vapour. This has the disadvantage that the heat transfer through air is very poor. Moreover, the wooden material is heated to high temperatures in a relatively dry environment.

The object of this invention is to provide a process for the acetylating of wood wherein the process guarantees a fast and sufficient acetylating of solid wood in practical and commercial dimensions. A further object of this invention is a process which leads to an acetylated product substantially free of acetic acid, with this product being obtained without the use of any additional chemical agents.

These objects are obtained by a process for the acetylating of wood having the steps of the introductory portion of claim 1 which is characterized by the steps of the characterizing portion of claim 1.

For a proper acetylation of solid wood in commercial dimensions, a sufficient penetration of uncatalyzed acetic anhydride and heat is required, as well as the removal of residuous acetic acid formed during the reaction. To achieve such an acetylated product substantially free of acetic anhydride/acetic acid, a post-treatment is carried out using a steam treatment for removing remaining acetic anhydride and the byproduct acetic acid. After this post-treatment the acetylated product is free of severe smell and can be further processed in, e. g., window frames or the like. The process according to the invention is, therefore, suitable for industrial use.

In general, the process according to the invention is based on the characteristic process steps as illustrated in the figure.

The figure schematically illustrates the inventive process which results in acetylated solid wood substantially free of acetic anhydride and acetic acid.

In the following the inventive process will be generally described along with the figure.

Step (a) concerns the provision of solid wood of different dimensions in a suitable treatment container, e. g. a stainless steel acetylation container or glass vessel. The material to be processed may be cold (< 30°C) or warm timber. In the latter case, the timber is preheated to a temperature in the range of 30 - 150°C.

Step (b) may be carried out in five different ways. First, a vacuum or a preliminary pressure is applied, e. g. for one hour, and then liquid acetic anhydride as acetylating medium is added to the solid wood. Alternatively, the order of the two substeps is reversed, i. e. the container is filled with liquid acetic anhydride, and during as well as after the filling process, a vacuum can be applied. The acetic anhydride can also be added to the wood directly without any preliminary pressure, preliminary vacuum, or further vacuum.

The added acetic anhydride solution is warm, i. e. the temperature of the solution is in the range of 30 - 150°C. The acetic anhydride solution is supplied, e. g., from a tank. In the case of the addition of an acetic anhydride solution being warmer than room temperature, a heating device is provided, from which the heated acetic anhydride solution is supplied to the treatment container. The acetylating medium can be diluted with up to 30% of acetic acid.

During step (b), the wood is impregnated with acetic anhydride. This impregnating step can be performed by using a pressure in the range of 2 - 15 bar or a vacuum, and a period of time for impregnation in the range of a few minutes to several hours, depending on the dimensions and the wood species used. The treatment container can be heated during impregnation.

The acetylation reaction (c) is carried out by heating the solid wood, i. e. the timber is surrounded by hot liquid acetic anhydride during the acetylation reaction, and afterwards drained of excessive acetic anhydride (d).

Alternatively, the wood is, at first, drained of excessive acetic anhydride (step (d)), which is then followed by the reaction step (c). The reaction time for acetylating the solid wood depends on the wood species used and its dimensions. In general, a period of time of up to 24 hours is sufficient to obtain an acetylated product. In most cases, a reaction time in the range of up to 3 hours is suitable. By using a warm acetic anhydride solution the reaction time can be reduced considerably because most of the reaction between the anhydride and the wood components takes place during the heating. The temperature inside the treatment container is set at a range of 70 - 150°C.

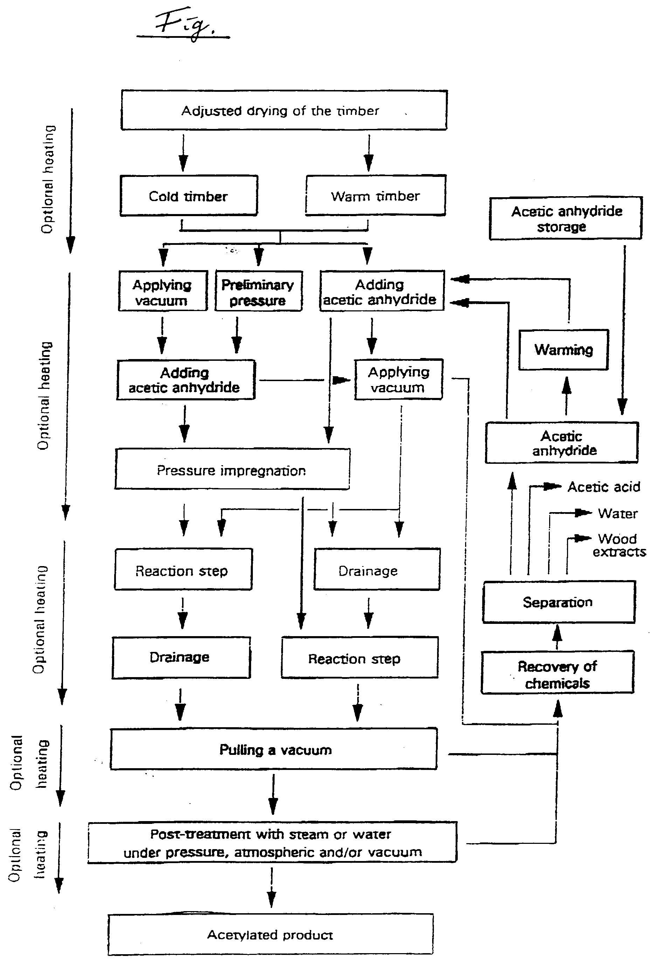

Step (e) comprises the application of a final vacuum, mostly for the time which is required to extract as much as possible non-reacted acetic anhydride and byproduct acetic acid from the wood at that applied temperature and an absolute pressure (vacuum), preferably with further heating, and more preferably, at the temperature used for the acetylation reaction. This step can also be applied directly after. Finally, according to step (f) in figure 1, a steam treatment under atmospheric pressure, vacuum, and/or pressure is performed. Both, final vacuum and steam treatment, are used to remove remaining acetic anhydride and the byproduct acetic acid, so that an acetylated product substantially free of these chemicals is obtained. The steam used in step (f) acts as a heat source for the wood to facilitate the evaporation of the byproduct acetic acid. It is also a carrier for this chemical.

Additionally, a recovery of the chemicals used in the process according to the invention, namely water, acetic acid, and acetic anhydride, is possible. The chemicals can be removed during process steps (b), (e) and (f) and are recovered by condensation, e. g. fractional destillation. Acetic acid obtained can be converted into acetic anhydride by known chemical reactions, e. g. with ketene. The recovered acetic anhydride may be supplied to the tank. Fresh acetic anhydride can be supplied into the tank from a storage.

For the final steam treatment, the wood is left in the treatment container and steam is blown into the container for a period of time sufficient to remove mainly all the remaining acetic anhydride and acectic acid. The steam is introduced into the treatment container under atmospheric pressure, pressure, or vacuum. Alternatively, a (deeper) vacuum can be applied to remove steam and acetic acid.

The following examples are presented as a further illustration of the invention.

### Example 1

Wood samples of beech and poplar with the dimensions 25 x 50 x 800 mm were climatized to a moisture content of 12%. Both wood species can easily be impregnated and were acetylated in a stainless steel acetylation plant in a semi-practical scale with a treatment vessel of 1.5 m length and 0.44 m diameter. The wood was placed into the treatment cylinder, and a vacuum was applied for one hour, whereafter the cylinder was filled with liquid acetic anhydride. The wood was impregnated for one hour at a pressure of 6 bars. The treatment vessel was heated during impregnation.

After the impregnation, the batch with beech samples was drained from excessive acetic anhydride and further heated to 75°C. After a reaction time of 3 hours, a vacuum was applied for 2.5 hours at 75°C. The batch with poplar was further heated to 75°C while the timber was surrounded by liquid acetic anhydride. After a reaction time of 3 hours, excessive acetic anhydride was drained from the cylinder. A vacuum was then applied for 2.5 hours at 75°C.

All treated samples were removed from the cylinder and put into water to stop the acetylation. The water was renewed every day for 7 days. After that, the samples were air conditioned for 3 days and transferred into an oven, the temperature thereof was increased from 40 to 102°C within 10 days. The achieved weight gains are shown in table 1.

**Table 1**

| Weight gain of poplar and beech due to acetylation | | |
|---|---|---|
| Species | Treatment during reaction step | Weight gain due to acetylation (%) |
| Poplar | vessel not drained of excessive acetic anhydride | 18-24 |
| Beech | treatment vessel drained | 7-10 |

### Example 2

Wood samples of pine sapwood and poplar with the dimensions 30 x 30 x 150 mm and 15 x 25 x 50 mm were dried to a moisture content of 8%. All wood samples were impregnated under vacuum, and acetylated in a preheated glass vessel at 120°C for 3 hours. After reaction, a vacuum was applied for 2.5 hours at 120°C. The amount of acetic acid left in the samples after this vacuum was 7%. Steam was pulled into the cylinder under a minor vacuum to keep the steam from condensing. The effect of the steam treatment with respect to the amount of residual acetic acid is shown in table 2.

**Table 2**

| Removal of residuous acetic acid in acetylated wood with a steam treatment | |
|---|---|
| Period of steaming (min) | Amount of residual acetic acid (%) |
| 0 | 7.0 |
| 15 | 4.3 |
| 30 | 2.6 |
| 45 | 1.8 |
| 60 | 1.2 |
| 75 | 0.8 |
| 90 | 0.7 |
| 105 | 0.6 |

## Claims

1. A process for the acetylation of wood, comprising the following steps:
(a) providing the wood in a treatment container,
(b) impregnating the wood with acetic anhydride as acetylating medium,
(c) leaving the impregnated wood in the acetic anhydride for further reaction,
(d) draining the wood from excessive acetic anhydride,
(e) applying a vacuum to remove non-reacted acetic anhydride and formed acetic acid, and
(f) post-treating the acetylated wood to remove remaining acetic anhydride and the byproduct acetic acid,
characterized by
providing solid wood in a treatment container,
impregnating the solid wood with warm acetic anhydride,
leaving the impregnated solid wood in the warm acetic anhydride for further reaction, and
post-treating the acetylated solid wood with steam.

2. The process according to claim 1, wherein in step (a) partially dried or dry solid wood is used.

3. The process according to claim 1 or 2, wherein in step (a) the solid wood is preheated to a temperature in the range of 30 to 150°C, preferably to the temperature used during the reaction step (c).

4. The process according to one of the claims 1 to 3, wherein the treatment container is heated to a temperature in the range of 70 to 150°C, preferably to the temperature used during the reaction step (c).

5. The process according to one of the claims 1 to 4, wherein the acetic anhydride is preheated to a temperature in the range of 70 to 150°C, preferably to the temperature used during the reaction step (c)

6. The process according to one of the claims 1 to 4, wherein cold acetic anhydride having a temperature of less than 70°C is added and is heated during impregnation.

7. The process according to one of the claims 1 to 6, wherein the acetic anhydride added is impregnated in step (b), using a full cell process.

8. The process according to one of the claims 1 to 6, wherein the acetic anhydride added is impregnated in step (b), using a Lowry process.

9. The process according to one of the claims 1 to 6, wherein the acetic anhydride added is impregnated in step (b), using a Rüping process.

10. The process according to one of the claims 1 to 7, wherein in step (b) liquid acetic anhydride is, at first, added into the treatment container, and then a vacuum is applied, with the vacuum also being applied before adding the acetic anhydride.

11. The process according to one of the claims 1 to 10, wherein the acetylation liquid is diluted with up to 30% of acetic acid.

12. The process according to one of the claims 1 to 11, wherein the impregnation time ranges from a few minutes to several hours, depending on dimensions and wood species used, and the impregnation pressure is in the range of 2 to 15 bar.

13. The process according to one of the claims 1 to 12, wherein the wood and the acetic anhydride are further heated during the reaction step.

14. The process according to one of the claims 1 to 13, wherein the solid wood is, at first, drained from excessive acetic anhydride (step (d)), and then the acetylation reaction is carried out by heating the impregnated solid wood (step (c)).

15. The process according to one of the claims 1 to 14, wherein the reaction time for acetylating the solid wood is up to 24 hours, depending on dimensions and wood species.

16. The process according to one of the claims 1 to 15, wherein the vacuum in step (e) is applied for 0.2 to 5 hours.

17. The process according to one of the claims 1 to 16, wherein the wood is heated to a temperature of 70 to 140°C during the vacuum step (e).

18. The process according to one of the claims 1 to 17, wherein in step (f) the acetylated wood is treated with steam in the treatment container under vacuum.

19. The process according to one of the claims 1 to 17, wherein in step (f) the acetylated wood is treated with steam in the treatment container under alternately (atmospheric) pressure and vacuum.

20. The process according to one of the claims 1 to 19, wherein the wood is heated to a temperature of 70 to 140°C during step (f).

21. The process according to one of the claims 1 to 20, wherein the chemicals used are recovered during the steps (b), (e), and (f).

## Patentansprüche

1. Verfahren zur Acetylierung von Holz mit den folgenden Schritten:
(a) Vorsehen des Holzes in einem Behandlungsbehälter,
(b) Imprägnieren des Holzes mit Essigsäureanhydrid als Acetylierungsmedium,
(c) Belassen des imprägnierten Holzes im Essigsäureanhydrid zur weiteren Reaktion,
(d) Dränieren des Holzes von überschüssigem Essigsäureanhydrid,
(e) Aufbringen eines Unterdrucks zum Entfernen von nicht reagiertem Essigsäureanhydrid und von gebildeter Essigsäure und
(f) Nachbehandeln des acetylierten Holzes zur Entfernung von verbleibendem Essigsäureanhydrid und von Essigsäure als Nebenprodukt,
gekennzeichnet durch
Vorsehen von Massivholz in einem Behandlungsbehälter,
Imprägnieren des Massivholzes mit warmem Essigsäureanhydrid,
Belassen des imprägnierten Massivholzes im warmen Essigsäureanhydrid zur weiteren Reaktion und
Nachbehandeln des acetylierten Massivholzes mit Dampf.

2. Verfahren nach Anspruch 1, bei dem in Schritt (a) teilweise getrocknetes oder trockenes Massivholz verwendet wird.

3. Verfahren nach Anspruch 1 oder 2, bei dem in Schritt (a) das Massivholz auf eine Temperatur in einem Bereich von 30 bis 150°C, vorzugsweise auf die während des Reaktionsschrittes (c) verwendete Temperatur, vorerhitzt wird.

4. Verfahren nach einem der Ansprüche 1 bis 3, bei dem der Behandlungsbehälter auf eine Temperatur in einem Bereich von 70 bis 150°C, vorzugsweise auf die während des Reaktionsschrittes (c) verwendete Temperatur, erhitzt wird.

5. Verfahren nach einem der Ansprüche 1 bis 4, bei dem das Essigsäureanhydrid auf eine Temperatur in einem Bereich von 70 bis 150°C, vorzugsweise auf die während des Reaktionsschrittes (c) verwendete Temperatur, vorerhitzt wird.

6. Verfahren nach einem der Ansprüche 1 bis 4, bei dem kaltes Essigsäureanhydrid mit einer Temperatur von weniger als 70°C zugesetzt und während der Imprägnierung erhitzt wird.

7. Verfahren nach einem der Ansprüche 1 bis 6, bei dem das zugesetzte Essigsäureanhydrid in Schritt (b) unter Anwendung eines Vollzellverfahrens imprägniert wird.

8. Verfahren nach einem der Ansprüche 1 bis 6, bei dem das zugesetzte Essigsäureanhydrid in Schritt (b) unter Anwendung eines Lowry-Verfahrens imprägniert wird.

9. Verfahren nach einem der Ansprüche 1 bis 6, bei dem das zugesetzte Essigsäureanhydrid in Schritt (b) unter Anwendung eines Rüping-Verfahrens imprägniert wird.

10. Verfahren nach einem der Ansprüche 1 bis 7, bei dem in Schritt (b) flüssiges Essigsäureanhydrid zuerst in den Behandlungsbehälter gegeben und dann ein Unterdruck aufgebracht wird, wobei der Unterdruck auch vor Zugabe des Essigsäureanhydrides aufgebracht wird.

11. Verfahren nach einem der Ansprüche 1 bis 10, bei dem die Acetylierungsflüssigkeit mit bis zu 30 % Essigsäure verdünnt wird.

12. Verfahren nach einem der Ansprüche 1 bis 11, bei dem die Imprägnierungszeit in Abhängigkeit von den Dimensionen und der verwendeten Holzart von einigen Minuten bis zu einigen Stunden reicht und der Imprägnierungsdruck in einem Bereich von 2 bis 15 bar liegt.

13. Verfahren nach einem der Ansprüche 1 bis 12, bei dem das Holz und das Essigsäureanhydrid während des Reaktionsschrittes weiter erhitzt werden.

14. Verfahren nach einem der Ansprüche 1 bis 13, bei dem das Massivholz zuerst von überschüssigem Essigsäureanhydrid dräniert wird (Schritt (d)), wonach die Acetylierungsreaktion durch Erhitzen des imprägnierten Massivholzes durchgeführt wird (Schritt (c)).

15. Verfahren nach einem der Ansprüche 1 bis 14, bei dem die Reaktionszeit zum Acetylieren des Massivholzes in Abhängigkeit von den Dimensionen und der Holzart bis zu 24 Stunden beträgt.

16. Verfahren nach einem der Ansprüche 1 bis 15, bei dem der Unterdruck in Schritt (e) über 0,2 bis 5 Stunden aufgebracht wird.

17. Verfahren nach einem der Ansprüche 1 bis 16, bei dem das Holz während des Unterdruckschrittes (e) auf eine Temperatur von 70 bis 140°C erhitzt wird.

18. Verfahren nach einem der Ansprüche 1 bis 17, bei dem in Schritt (f) das acetylierte Holz mit Dampf im Behandlungsbehälter unter Unterdruck behandelt wird.

19. Verfahren nach einem der Ansprüche 1 bis 17, bei dem in Schritt (f) das acetylierte Holz mit Dampf im Behandlungsbehälter abwechselnd unter (atmosphärischem) Druck und Unterdruck behandelt wird.

20. Verfahren nach einem der Ansprüche 1 bis 19, bei dem das Holz während Schritt (f) auf eine Temperatur von 70 bis 140°C erhitzt wird.

21. Verfahren nach einem der Ansprüche 1 bis 20, bei dem die verwendeten Chemikalien während der Schritte (b), (e) und (f) wiedergewonnen werden.

## Revendications

1. Procédé d'acétylation de bois, qui comprend les étapes consistant à :
(a) introduire le bois dans un récipient de traitement,
(b) imprégner le bois d'anhydride acétique à titre de milieu d'acétylation,
(c) laisser le bois imprégné dans l'anhydride acétique, en vue d'une réaction plus poussée,
(d) débarrasser le bois de l'anhydride acétique excédentaire,
(e) appliquer un vide pour éliminer l'anhydride acétique non entré en réaction et l'acide acétique formé et
(f) post-traiter le bois acétylé pour éliminer l'anhydride acétique résiduel et le sous-produit qu'est l'acide acétique,
caractérisé en ce que
on introduit du bois plein dans un récipient de traitement,
on imprègne le bois plein d'anhydride acétique chaud,
on laisse le bois solide imprégné dans l'anhydride acétique chaud, en vue d'une réaction plus poussée et
on post-traite le bois plein acétylé de vapeur d'eau.

2. Procédé suivant la revendication 1, caractérisé en ce que dans l'étape (a), on utilise du bois plein partiellement séché ou sec.

3. Procédé suivant la revendication 1 ou 2, caractérisé en ce que dans l'étape (a), on préchauffe le bois plein jusqu'à une température qui varie de 30 à 150°C, de préférence, jusqu'à la température utilisée au cours de l'étape réactionnelle (c).

4. Procédé suivant l'une quelconque des revendications 1 à 3, caractérisé en ce que l'on chauffe le récipient de traitement jusqu'à une température qui varie de 70 à 150°C, de préférence, jusqu'à la température utilisée au cours de l'étape réactionnelle (c).

5. Procédé suivant l'une quelconque des revendications 1 à 4, caractérisé en ce que l'on préchauffe l'anhydride acétique jusqu'à une température qui varie de 70 à 150°C, de préférence, jusqu'à la température utilisée au cours de l'étape réactionnelle (c).

6. Procédé suivant l'une quelconque des revendications 1 à 4, caractérisé en ce que l'on ajoute de l'anhydride acétique froid possédant une température inférieure à 70°C et on le chauffe au cours de l'imprégnation.

7. Procédé suivant l'une quelconque des revendications 1 à 6, caractérisé en ce que l'on procède à l'imprégnation avec l'anhydride acétique ajouté au cours de l'étape (b), en utilisant un procédé à cellule pleine.

8. Procédé suivant l'une quelconque des revendications 1 à 6, caractérisé en ce que l'on procède à l'imprégnation avec l'anhydride acétique ajouté au cours de l'étape (b), en utilisant un procédé Lowry.

9. Procédé suivant l'une quelconque des revendications 1 à 6, caractérisé en ce que l'on procède à l'imprégnation avec l'anhydride acétique ajouté au cours de l'étape (b), en utilisant un procédé Rüping.

10. Procédé suivant l'une quelconque des revendications 1 à 7, caractérisé en ce que dans l'étape (b), on introduit en premier lieu l'anhydride acétique liquide dans le récipient de traitement et on y applique ensuite un vide, le vide étant également appliqué avant l'addition de l'anhydride acétique.

11. Procédé suivant l'une quelconque des revendications 1 à 10, caractérisé en ce que l'on dilue le liquide d'acétylation avec jusqu'à 30% d'acide acétique.

12. Procédé suivant l'une quelconque des revendications 1 à 11, caractérisé en ce que la durée de l'imprégnation varie de quelques minutes à plusieurs heures, en fonction des dimensions et de l'espèce de bois que l'on utilise et la pression d'imprégnation varie de 2 à 15 bars.

13. Procédé suivant l'une quelconque des revendications 1 à 12, caractérisé en ce que l'on chauffe davantage le bois et l'anhydride acétique au cours de l'étape de réaction.

14. Procédé suivant l'une quelconque des revendications 1 à 13, caractérisé en ce que l'on essore d'abord le bois plein de l'anhydride acétique excédentaire (étape (d)) et on entreprend ensuite la réaction d'acétylation par le chauffage du bois plein imprégné (étape (c)).

15. Procédé suivant l'une quelconque des revendications 1 à 14, caractérisé en ce que la durée réactionnelle pour l'acétylation du bois plein s'étend jusqu'à 24 heures, en fonction des dimensions et de l'espèce de bois.

16. Procédé suivant l'une quelconque des revendications 1 à 15, caractérisé en ce que l'on applique le vide au cours de l'étape (e) pendant 0,2 à 5 heures.

17. Procédé suivant l'une quelconque des revendications 1 à 16, caractérisé en ce que l'on chauffe le bois jusqu'à une température de 70 à 140°C au cours de l'étape de mise sous vide (e).

18. Procédé suivant l'une quelconque des revendications 1 à 17, caractérisé en ce qu'au cours de l'étape (f), on traite le bois acétylé par de la vapeur d'eau dans le récipient de traitement maintenu sous vide.

19. Procédé suivant l'une quelconque des revendications 1 à 17, caractérisé en ce qu'au cours de l'étape (f), on traite le bois acétylé par de la vapeur d'eau dans le récipient de traitement maintenu alternativement sous pression (atmosphérique) et sous vide.

20. Procédé suivant l'une quelconque des revendication 1 à 19, caractérisé en ce que l'on chauffe le bois jusqu'à une température de 70 à 140°C au cours de l'étape (f).

21. Procédé suivant l'une quelconque des revendications 1 à 20, caractérisé en ce que les produits chimiques utilisés sont récupérés au cours des étapes (b), (e) et (f).
